# FASCICULE DE BREVET EUROPEEN

(11) **EP 2 784 360 B1**
(45) Date de publication et mention de la délivrance du brevet: **18.07.2018**
(21) Numéro de dépôt: 14161592.2
(22) Date de dépôt: 25.03.2014
(51) Int. Cl.: F16K 3/08, F16K 15/03, F16K 15/18, G05D 7/01, E03F 5/10

(54) **Dispositif pour gérer l'écoulement de liquide**
Vorrichtung zur Steuerung des Ablaufens einer Flüssigkeit
Device for managing the flow of liquid

(30) Priorité: 25.03.2013 FR 1352629
(43) Date de publication de la demande: 01.10.2014
(73) Titulaire: Kipopluie, 33380 Mios (FR)
(72) Inventeur: Roussel, Jacques-Albert, 33200 Cauderan (FR)
(74) Mandataire: Cabinet Plasseraud

(56) Documents cités:
- EP-A1- 2 206 842
- EP-A1- 2 362 123
- WO-A1-2008/022367
- DE-A1- 3 416 433
- DE-A1- 19 821 648
- DE-U1-202008 015 296

## Description

### ARRIERE-PLAN DE L'INVENTION

### Domaine de l'invention

La présente invention concerne un dispositif pour gérer l'écoulement de liquide, notamment d'eaux pluviales.

### Arrière-plan technologique

On connaît des systèmes de rétention des eaux pluviales, qui permettent de stocker ou de retenir temporairement des eaux pluviales. Ces systèmes sont notamment mis en oeuvre pour réguler le débit des eaux de pluie qui s'écoulent en aval d'un point géographique donné lors de fortes pluies, notamment lorsque les conditions d'infiltration sont défavorables (faible perméabilité, nappe phréatique trop haute, ...).

Ces systèmes de rétention comprennent généralement un réceptacle enfoui dans le sol lequel peut soit constituer une zone tampon entre une ou plusieurs entrées du réceptacle et une conduite placée en aval de ce réceptacle pour l'évacuation des eaux, soit constituer une réserve permettant de retenir partiellement ou en totalité les eaux de pluie qui s'y accumulent en vue d'une exploitation ultérieure.

Une zone géographique donnée peut ainsi être couverte par un réseau de gestion des eaux de ruissellement et de pluie comprenant un ou plusieurs bassins, des canalisations pour le transport de ces eaux ainsi que des systèmes de filtration des eaux.

Le débit des eaux en sortie de ce réseau est typiquement limité et il est alors connu pour respecter ce débit de disposer une canalisation présentant un orifice calibré ou de mettre en oeuvre des régulateurs du type à flotteur.

Néanmoins, ces derniers nécessitent une grande amplitude de déplacement du flotteur qui en fait un système de régulation encombrant lorsqu'il est nécessaire de gérer des variations de débits importantes.

De plus, ils ne peuvent être mis en oeuvre avec des eaux de pluie trop chargées. En outre, ils sont couteux à installer et à entretenir.

Le document DE 20 2008 015 296 U1 divulgue un moyen de restriction de débit ajustable pour de l'eau potable, lequel est constitué d'un premier tube (10) et d'un second tube (20), ces tubes (10,20) définissant ensemble un canal d'écoulement (5). Un dispositif de commande (30) et un connecteur cylindrique (40) sont placés entre le premier et le second tube (10, 20), le dispositif de commande (30) ayant une pluralité d'orifice (31) de délimitation axiale, placés à égale distance de l'axe central du dispositif de commande (30), ayant une même longueur, au moins l'un de ces orifices présentant un diamètre différent. Le connecteur (40) ayant un trou traversant (41), ce trou (41) peut être amené en alignement par rotation du connecteur (40), avec l'un des orifices (31) de sorte que les canaux d'écoulement (5) du premier et du second tube (10,20) sont reliés entre eux.

### Objet de l'invention

La présente invention vise à pallier les inconvénients ci-dessus exposés en proposant un dispositif pour la gestion de l'écoulement des eaux pluviales, simple dans sa conception et dans son mode opératoire, compact et économique, autorisant un contrôle et une régulation du débit des eaux pluviales reçues à l'entrée du dispositif.

Un autre objet de la présente invention est un tel dispositif offrant une large plage de variation du débit des eaux pluviales en sortie de celui-ci.

Encore un but de la présente invention est un réseau équipé d'un tel dispositif de gestion de l'écoulement de liquide pour assurer la gestion des eaux de pluie d'un bassin.

### BREVE DESCRIPTION DE L'INVENTION

A cet effet, l'invention concerne un dispositif pour gérer l'écoulement de liquide comportant un corps comprenant un orifice d'entrée, un orifice de sortie et une chambre de réception, au moins ladite chambre de réception comprenant un fond incliné.

Selon l'invention,
- ladite chambre de réception comprend un régulateur de débit permettant de varier le débit audit orifice de sortie,
- ledit régulateur de débit comporte deux plateaux agencés dans ladite chambre pour intercepter ledit écoulement en étant placés en regard l'un de l'autre, un premier plateau comprenant au moins deux orifices dont les diamètres sont différents, le second plateau comprenant un orifice placé au niveau du fond de ladite chambre, ledit premier plateau étant mobile en rotation par rapport audit second plateau de sorte que la mise en regard d'un orifice du premier plateau de diamètre Φi et dudit orifice du second plateau détermine un débit de liquide Di.

De manière avantageuse, le régulateur de débit joue le rôle, pour l'écoulement de liquide, d'un obturateur multi-diaphragme.

Ce dispositif pour gérer l'écoulement de liquide opère par gravité, l'eau qui s'écoule de l'orifice d'entrée vers l'orifice de sortie étant interceptée sur son trajet par le régulateur de débit. De manière avantageuse, le positionnement de l'unique orifice du second plateau au niveau du fond incliné de la chambre de réception, c'est-à-dire au niveau du fil d'eau du dispositif, autorise un fonctionnement de ce dernier avec des débits de liquide très faibles.

De préférence, les deux plateaux sont plaqués l'un contre l'autre.

Dans différents modes de réalisation particuliers de ce dispositif pour gérer un écoulement, chacun ayant ses avantages particuliers et susceptibles de nombreuses combinaisons techniques possibles:
- lesdits orifices des premier et second plateaux sont configurés pour assurer une variation de débit comprise entre 1 et 50,
- ledit axe de rotation dudit plateau mobile en rotation est parallèle à l'axe d'écoulement desdits liquides entre les orifices d'entrée et de sortie dudit dispositif,
- le dispositif comporte un clapet anti-retour affecté audit régulateur de débit.
De manière avantageuse, ce clapet anti-retour est monté en pivotement entre au moins une première position dite d'obturation dans laquelle il obture de manière étanche ledit régulateur de débit et une deuxième position dite de service dans laquelle ce clapet autorise le passage de liquide que dans une seule direction, à savoir un liquide s'écoulant par gravité de l'orifice d'entrée vers l'orifice de sortie. Bien entendu, ce clapet anti-retour peut prendre au moins une troisième position dans laquelle il est placé totalement en retrait du ou des orifices du régulateur de débit pour autoriser le libre passage de liquide au travers de ce régulateur.
De préférence, le dispositif comprend un dispositif de verrouillage et de déverrouillage du clapet anti-retour permettant de bloquer l'écoulement de liquide en deçà d'une pression de liquide seuil prédéfinie et de libérer cet écoulement lorsque cette pression seuil de liquide en amont du régulateur de débit est atteinte. Ce dispositif de verrouillage et de déverrouillage du clapet anti-retour qui assure le verrouillage du clapet anti-retour dans sa première position dite d'obturation lorsque la pression de liquide est inférieure à une pression seuil, permet avantageusement de bloquer l'écoulement de liquide présentant un débit inférieur à un débit requis en sortie du dispositif pour gérer l'écoulement de liquide.
A titre purement illustratif, ce dispositif de verrouillage et de déverrouillage du clapet anti-retour comporte un élément de ressort dont la raideur k est déterminée par rapport à la pression seuil requise.
Alternativement, ce dispositif de verrouillage et de déverrouillage du clapet anti-retour comporte un moyen de blocage pouvant prendre une position active dans laquelle il maintient le clapet anti-retour en position dite d'obturation et une position inactive dans laquelle il libère le déplacement du clapet anti-retour, et un dispositif de commande qui peut déplacer le moyen de blocage de la position active à la position inactive. De préférence, ce dispositif de commande peut être commandé à distance pour en cas d'urgence verrouiller ledit clapet anti-retour et empêcher par exemple le déversement de liquides pollués en aval du dispositif pour gérer l'écoulement de liquide.
- chaque orifice du premier plateau comporte un élément d'étanchéité pour assurer son étanchéité avec le second plateau lorsqu'il n'est pas placé en regard de l'orifice du second plateau placé au niveau du fond de la chambre de réception.
Avantageusement, le premier plateau, dit disque d'ajutage, mobile en rotation par rapport au second plateau fixe, comporte sur son pourtour un premier élément d'étanchéité et chacun de ses orifices comporte un deuxième élément d'étanchéité pour assurer l'étanchéité des orifices non placés en regard de l'orifice de sortie du second plateau. On évite ainsi toute fuite de liquide par l'intermédiaire des orifices du premier plateau non utilisés. Autrement dit, on s'assure ainsi du passage de liquide par le seul orifice du premier plateau placé en regard de l'orifice du second plateau placé au niveau du fond de la chambre de réception.
De manière avantageuse, chaque élément d'étanchéité est un joint à lèvre.
- le dispositif comporte un clapet pour obturer ledit régulateur de débit et bloquer ainsi l'écoulement desdits liquides.
Avantageusement, ledit clapet est monté en pivotement entre une position de repos et une position d'obturation dans laquelle il est obture de manière étanche ledit régulateur de débit.
- le corps du dispositif est d'un seul tenant,
- la partie supérieure du régulateur de débit comporte une ouverture de sécurité de trop-plein,

Cette ouverture permet le passage direct des eaux vers l'exutoire en cas de pluies abondantes et notamment en cas de pluies dites décennales ou centennales. On évite ainsi une éventuelle inondation des zones environnant le dispositif pour gérer l'écoulement de liquide par montée des eaux dans la chambre de réception.
- le dispositif comprend un organe de verrouillage pour maintenir ledit clapet en position de repos.
Avantageusement, ledit organe de verrouillage est commandable à distance.
- le dispositif comprend un premier actionneur pour déplacer ledit clapet de sa position de repos.
De préférence, ledit actionneur est un actionneur commandable à distance.
- le dispositif comprend un deuxième actionneur commandable à distance pour assurer la mise en rotation du premier plateau et ainsi varier le débit du liquide.
- lesdits orifices d'entrée et de sortie du dispositif comportent chacun au moins deux éléments de raccordement accolés, lesdits éléments de raccordement étant de diamètres différents et en communication de fluide pour autoriser un branchement dudit dispositif sur des circuits de transport d'eau de différents diamètres.

L'invention concerne également une installation de récupération et/ou de stockage des eaux pluviales comprenant un dispositif pour gérer l'écoulement de liquide tel que décrit précédemment.

L'invention concerne encore l'utilisation d'un régulateur de débit comportant deux plateaux placés en regard l'un de l'autre, un premier plateau comprenant au moins deux orifices dont les diamètres sont différents, le second plateau comprenant un orifice, un desdits plateaux étant mobile en rotation par rapport à l'autre plateau de sorte que la mise en regard d'un orifice du premier plateau de diamètre Φi et dudit orifice du second plateau détermine un débit de liquide Di, pour réguler un écoulement de liquide.

Ce régulateur de débit est placé de manière à intercepter un écoulement de liquide tel que des eaux pluviales.

De préférence, on met en oeuvre un clapet d'obturation pour obturer ledit régulateur de débit de manière à empêcher toute remontée de pollution.

### BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :
- la Figure 1 est une vue en perspective d'un dispositif pour gérer un écoulement de liquide selon un mode de réalisation préféré de la présente invention ;
- la Figure 2 représente schématiquement en vue de face le dispositif de la fig. 1 ;
- la Figure 3 est une vue en coupe transversale du dispositif de la fig. 1 montrant le clapet en position d'obturation du régulateur de débit, ce clapet étant monté en pivotement;
- la Figure 4 est une vue en perspective montrant le régulateur de débit et le clapet mis en oeuvre dans le dispositif de la fig. 1 ;
- la Figure 5 est une représentation schématique en vue de face d'un régulateur de débit d'un dispositif pour gérer un écoulement de liquide selon un second mode de réalisation de la présente invention ;
- la Figure 6 est une vue en perspective du régulateur de débit de la fig. 5;

### DESCRIPTION DETAILLEE DE MODE DE REALISATION DE L'INVENTION

Tout d'abord, on note que les figures ne sont pas à l'échelle.

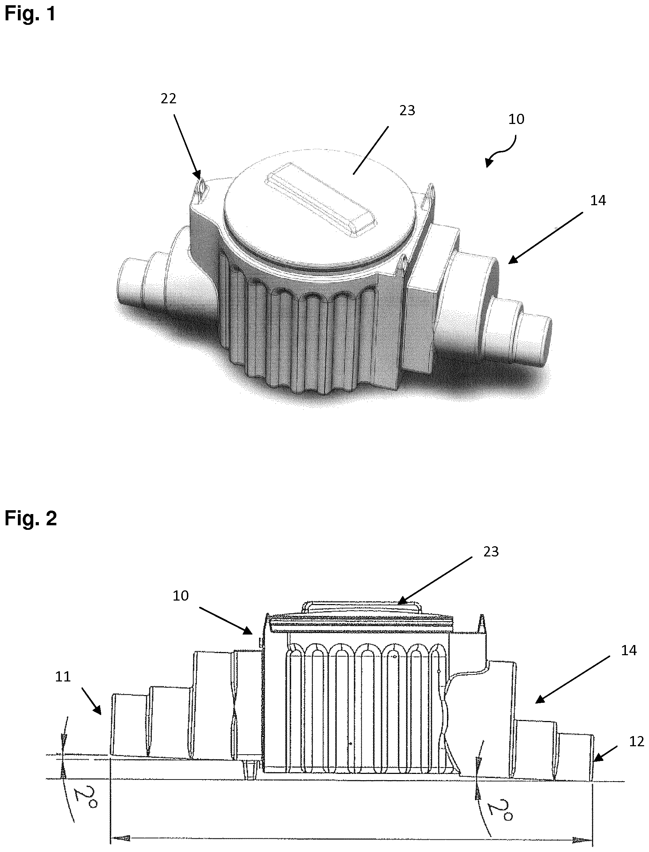

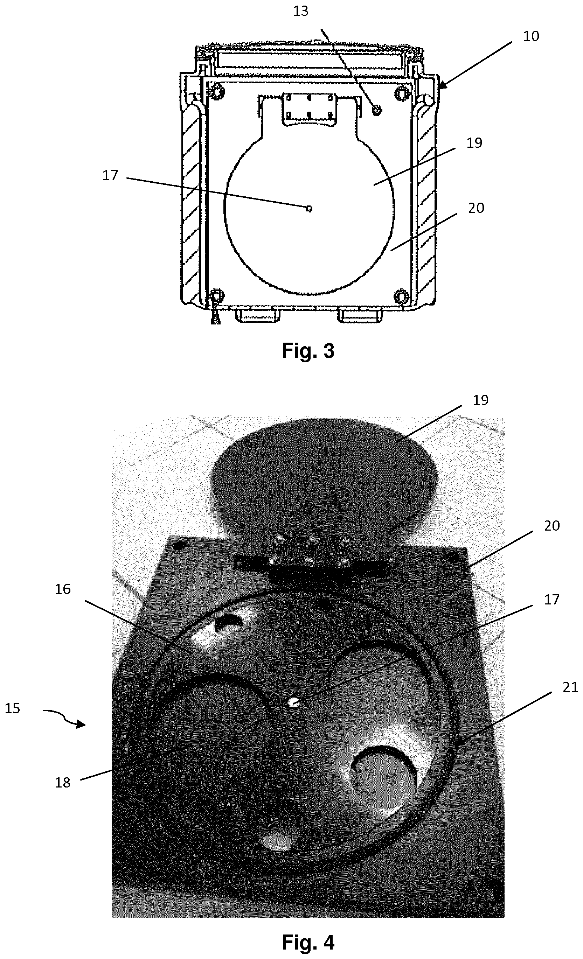

Les Figures 1 à 4 montrent de manière schématique un dispositif pour gérer l'écoulement des eaux pluviales selon un mode de réalisation préféré de la présente invention.

Le dispositif comporte un corps principal 10 étanche et monobloc, ce corps principal étant réalisé en matière plastique. A titre purement illustratif, la matière plastique pourra être notamment choisie dans le groupe comprenant le polyéthylène, et notamment le PE-HD ; le polyamide ou encore le PVC rigide.

Le corps principal 10 comporte un orifice d'entrée 11 des eaux pluviales, un orifice de sortie 12 et une chambre de réception 13 des eaux pluviales dont le volume interne défini une zone tampon autorisant une accumulation des eaux pluviales en cas de volumes importants à traiter. A titre purement illustratif, cette chambre 13 de section circulaire ou sensiblement circulaire, présente une hauteur de l'ordre de 450 mm pour un diamètre interne de l'ordre de 670 mm.

Les orifices d'entrée 11 et de sortie 12 comportent chacun trois éléments 14 de raccordement accolés et en communication de fluide, lesquels présentent des diamètres différents pour autoriser un branchement du dispositif sur des circuits de transport d'eau de différents diamètres.

Le dispositif pour gérer un écoulement est donc interopérable sur différents réseaux en différents diamètres tels que par exemple 200 et 400 mm, aussi bien en entrée qu'en sortie vers l'exutoire. Le choix du diamètre peut se faire sur le chantier en sciant sur des lignes prédéfinies les éléments de raccordement, ou connexions, aux diamètres désirés.

Une pente est ménagée entre l'orifice d'entrée 11 et l'orifice de sortie 12 des eaux pluviales du dispositif pour permettre un écoulement naturel de l'eau par gravité. Cette pente est supérieure ou égale à 2%. Elle est ici de l'ordre de 2%.

Dans la chambre de réception 13 est placé un régulateur 15 de débit, appelé régulateur de débit à barillet.

Ce régulateur 15 de débit comporte deux plateaux agencés dans la chambre pour intercepter l'écoulement des eaux pluviales ayant pénétré par l'orifice 11 d'entrée et dans la chambre de réception 13. Ces deux plateaux sont plaqués l'un contre l'autre.

Un premier plateau 16 présente une pluralité d'orifices de diamètres différents, ce premier plateau étant mobile en rotation autour d'un axe 17 de rotation parallèle à l'axe d'écoulement des liquides entre l'orifice d'entrée 11 et l'orifice de sortie 12 des eaux pluviales. A titre d'exemple, le nombre d'orifices du premier plateau 16 est ici égal à huit.

Le second plateau 18 qui est fixe, comprend un unique orifice placé dans la partie basse de la chambre de réception 13 à proximité immédiate du fond de la chambre et en étant approximativement en regard de l'orifice de sortie 12 du dispositif pour gérer l'écoulement des eaux pluviales. Autrement dit, cet unique orifice débouche donc sur la périphérie du second plateau 18.

Lors de la mise en regard d'un des orifices du premier plateau 16 et de l'unique orifice du second plateau 18, on détermine un premier débit Di des eaux pluviales en sortie du dispositif. En déplaçant le premier plateau 16 en rotation par rapport au second plateau 18 de manière à placer un nouvel orifice de diamètre différent du premier plateau 16 en regard de l'unique orifice du second plateau 18, on varie ainsi le débit de l'écoulement.

Les orifices du premier plateau 16 sont distribués de sorte que la rotation du premier plateau 16 autour de l'axe 17 ne peut faire correspondre, à chaque fois, qu'un seul de ces orifices avec l'unique orifice du second plateau 18.

Les orifices des premier et second plateaux 16, 18 sont ici avantageusement configurés pour assurer une variation de débit pouvant atteindre cinquante (50) fois le plus petit débit. A titre purement illustratif, on peut ainsi définir un dispositif assurant une variation de débit comprise entre 1 l/s et 50 l/s. Bien entendu, un des orifices du premier plateau 16 a un diamètre égal ou sensiblement égal au diamètre de l'unique orifice du second plateau 18.

Le dispositif comporte également un clapet 19 d'obturation pour obturer le régulateur de débit et bloquer ainsi l'écoulement des eaux pluviales.

Ce clapet 19 d'obturation est monté en pivotement entre une position de repos où il est placé à distance des orifices du premier plateau 16 et une position d'obturation.

Les premier et second plateaux étant montés sur un support 20, ce support comporte un joint d'étanchéité 21 entourant le premier plateau 16 monté mobile sur ce support, de sorte que le clapet 19 d'obturation venant recouvrir les orifices du premier plateau 16, en position d'obturation, obture de manière étanche le régulateur 15 de débit.

Le corps 10 du dispositif comprend également des anneaux de levage 22 placés à son extrémité supérieure de manière à assurer une manipulation aisée de celui-ci. La partie supérieure de la chambre de réception 13 est également ouverte pour fournir un accès à un opérateur, par exemple en vue du déplacement manuel du premier plateau 16 pour varier le débit du liquide. Cette ouverture est fermée de manière étanche par un couvercle 23 en plastique.

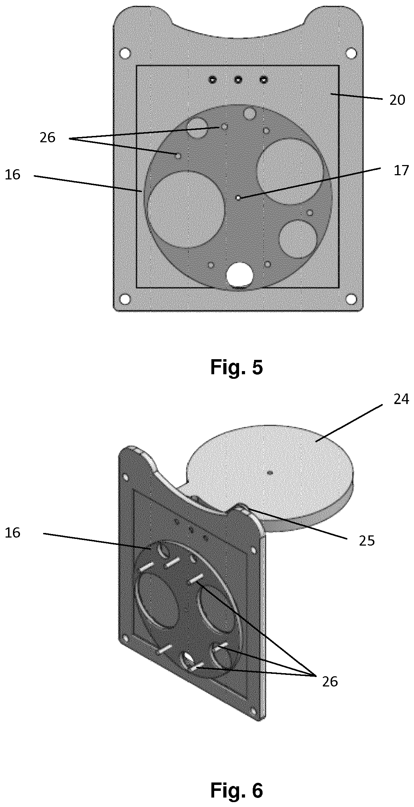

Les Figures 5 et 6 sont des représentations schématiques d'un régulateur de débit d'un dispositif pour gérer un écoulement de liquide selon un autre mode de réalisation de la présente invention. Les éléments des Figures 5 et 6 portant les mêmes références que ceux des Figures 1 à 4 représentent les mêmes objets lesquels ne seront pas décrits de nouveau ci-après.

Ce régulateur de débit diffère de celui des Figures 1 à 4 en ce qu'il comprend notamment un clapet 24 anti-retour empêchant le fil d'eau aval de remonter vers l'intérieur du dispositif pour gérer l'écoulement de liquide, en cas de montée en charge en aval de ce dispositif.

Ce régulateur de débit comporte également un ressort 25 de compression tendant à maintenir ledit clapet 24 anti-retour dans sa position dite d'obturation. Ce ressort 25 permet de s'assurer d'un débit minimum en sortie du dispositif pour gérer l'écoulement de liquide car une pression minimale des eaux est requise pour contrecarrer la force exercée par le ressort 25 et permettre l'ouverture du clapet 24 anti-retour.

Avantageusement, ce clapet 24 anti-retour peut être déplacé rapidement et maintenu en position d'obturation en cas d'urgence, par exemple pour retenir des eaux polluées et empêcher leur relargage dans une rivière avoisinante. Pour cela, un bras tel qu'un vérin ou bras télescopique, relié à un dispositif de commande à distance (non représentés) permet de déplacer le clapet 24 anti-retour.

Ce régulateur de débit comporte encore des éléments 26 visuels tels que des mires colorées permettant à l'opérateur d'ajuster le débit du régulateur à distance sans avoir de vue directe sur les orifices du premier plateau 16.

Le déplacement en rotation du premier plateau 16 peut, par exemple, être réalisé au moyen d'une tige (non représentée) présentant un organe de préhension à son extrémité libre tel qu'un crochet, cette tige étant tenue par l'opérateur qui vient placer en prise cet organe de préhension dans un moyen de réception-retenue (non représenté) prévu à cet effet sur le premier plateau 16 ou disque d'ajutage.

## Revendications

1. Dispositif pour gérer l'écoulement de liquide comportant un corps (10) comprenant un orifice d'entrée (11), un orifice de sortie (12) et une chambre de réception (13), au moins ladite chambre de réception (13) comprenant un fond incliné, dans lequel dispositif
- ladite chambre de réception (13) comprend un régulateur (15) de débit permettant de varier le débit audit orifice de sortie (12), et
ledit régulateur (15) de débit comporte deux plateaux (16, 18) agencés dans ladite chambre pour intercepter ledit écoulement en étant placés en regard l'un de l'autre, ledit premier plateau (16) comprenant au moins deux orifices dont les diamètres sont différents et étant mobile en rotation par rapport audit second plateau (18), le second plateau comprenant un orifice, ledit premier plateau (16) étant mobile en rotation par rapport audit second plateau de sorte que la mise en regard d'un orifice du premier plateau de diamètre Φi et dudit orifice du second plateau détermine un débit de liquide Di,
le dispositif étant **caractérise en ce que** ledit orifice dudit second plateau est placé au niveau du fond incliné de la dite chambre (13), c'est-à-dire au niveau du fil d'eau du dispositif.

2. Dispositif selon la revendication 1, **caractérisé en ce que** lesdits orifices des premier et second plateaux (16, 18) sont configurés pour assurer une variation de débit comprise entre 1 et 50 fois le plus petit débit.

3. Dispositif selon la revendication 1 ou 2, **caractérisé en ce qu'**il comporte un clapet (24) anti-retour affecté audit régulateur de débit.

4. Dispositif selon la revendication 3, **caractérisé en ce qu'**il comprend un dispositif de verrouillage et de déverrouillage du clapet (24) anti-retour permettant de bloquer l'écoulement de liquide en deçà d'une pression de liquide seuil prédéfinie et de libérer cet écoulement lorsque cette pression seuil de liquide est atteinte en amont du régulateur de débit.

5. Dispositif selon la revendication 3 ou 4,**caractérisé en ce que** ledit clapet (24) anti-retour étant mobile entre une première position dite d'obturation dans laquelle il obture de manière étanche ledit régulateur (15) de débit et au moins une deuxième position dans laquelle il autorise le passage de liquide s'écoulant au moins de l'orifice d'entrée (11) vers l'orifice de sortie (12), ledit dispositif comporte un moyen pour assurer le déplacement dudit clapet anti-retour entre au moins lesdites deux positions.

6. Dispositif selon la revendication 5, **caractérisé en ce que** ledit moyen pour assurer le déplacement comporte un organe mobile commandable à distance dont une extrémité est reliée audit clapet.

7. Dispositif selon l'une quelconque des revendications 1 à 6, **caractérisé en ce que** ledit corps (10) est d'un seul tenant.

8. Dispositif selon l'une quelconque des revendications 1 à 7, **caractérisé en ce que** la partie supérieure du régulateur (15) de débit comporte une ouverture de sécurité de trop-plein.

9. Dispositif selon l'une quelconque des revendications 1 à 8, **caractérisé en ce que** chaque orifice du premier plateau comporte un élément d'étanchéité pour assurer son étanchéité avec le second plateau lorsqu'il n'est pas placé en regard de l'orifice du second plateau placé au niveau du fond de la chambre de réception.

10. Installation de récupération et/ou de stockage des eaux pluviales comprenant un dispositif pour gérer l'écoulement de liquide selon l'une quelconque des revendications 1 à 9.

## Patentansprüche

1. Einrichtung zum Führen einer Flüssigkeitsströmung, umfassend einen Körper (10), welcher eine Eingangsöffnung (11), eine Ausgangsöffnung (12) und eine Aufnahmekammer (13) umfasst, wobei wenigstens die Aufnahmekammer (13) einen geneigten Boden umfasst,
wobei in der Einrichtung
- die Aufnahmekammer (13) einen Durchfluss-Regulator (15) umfasst, der es ermöglicht, den Durchfluss an der Ausgangsöffnung (12) zu variieren, und wobei der Durchfluss-Regulator (15) zwei Platten (16, 18) umfasst, die in der Kammer angeordnet sind, um die Strömung abzufangen, indem diese einander gegenüber angeordnet sind, wobei die erste Platte (16) wenigstens zwei Öffnungen umfasst, deren Durchmesser verschieden sind, und die in Bezug auf die zweite Platte (18) drehbeweglich ist, wobei die zweite Platte einer Öffnung aufweist, wobei die erste Platte (16) in Bezug auf die zweite Platte derart drehbeweglich ist, dass das Gegenüberstellen einer Öffnung der ersten Platte mit Durchmesser Φi und der Öffnung der zweiten Platte einen Flüssigkeitsdurchfluss Di bestimmt, wobei die Einrichtung **dadurch gekennzeichnet ist, dass** die Öffnung der zweiten Platte auf Höhe des geneigten Bodens der Kammer (13) platziert ist, also auf Höhe des Wasserlaufs der Einrichtung.

2. Einrichtung nach Anspruch 1, **dadurch gekennzeichnet, dass** die Öffnungen der ersten und der zweiten Platte (16, 18) dazu konfiguriert sind, eine Durchflussvariation sicherzustellen, die zwischen dem einfachen und dem fünfzigfachen des kleinsten Durchflusses liegt.

3. Einrichtung nach Anspruch 1 oder 2, **dadurch gekennzeichnet, dass** sie ein dem Durchfluss-Regulator zugeordnetes Rückschlagventil (24) umfasst.

4. Einrichtung nach Anspruch 3, **dadurch gekennzeichnet, dass** sie eine Einrichtung zum Verriegeln und Entriegeln des Rückschlagventils (24) umfasst, was es ermöglicht, die Flüssigkeitsströmung unterhalb einer vordefinierten Flüssigkeitsdruck-Schwelle zu blockieren, und diese Strömung freizugeben, wenn die Flüssigkeitsdruck-Schwelle stromaufwärts von dem Durchfluss-Regulator erreicht wird.

5. Einrichtung nach Anspruch 3 oder 4, **dadurch gekennzeichnet, dass** das Rückschlagventil (24) zwischen einer als Verschlussposition bezeichneten ersten Position, in welcher es in dichter Weise den Durchfluss-Regulator (15) verschließt, und wenigstens einer zweiten Position beweglich ist, in welcher es den Durchfluss von Flüssigkeit ermöglicht, welche wenigstens von der Eintrittsöffnung (11) zu der Austrittsöffnung (12) strömt, wobei die Einrichtung ein Mittel umfasst, um die Verlagerung des Rückschlagventils zwischen wenigstens den zwei Positionen sicherzustellen.

6. Vorrichtung nach Anspruch 5, **dadurch gekennzeichnet, dass** das Mittel zum Sicherstellen der Verlagerung ein fernsteuerbares bewegliches Element umfasst, dessen eines Ende mit dem Ventil verbunden ist.

7. Einrichtung nach einem der Ansprüche 1 bis 6, **dadurch gekennzeichnet, dass** der Körper (10) einstückig ausgebildet ist.

8. Einrichtung nach einem der Ansprüche 1 bis 7, **dadurch gekennzeichnet, dass** der obere Teil des Durchfluss-Regulators (15) eine Öffnung zur Überlaufsicherung umfasst.

9. Einrichtung nach einem der Ansprüche 1 bis 8, **dadurch gekennzeichnet, dass** jede Öffnung der ersten Platte ein Dichtelement umfasst, um deren Dichtigkeit mit der zweiten Platte sicherzustellen, wenn sie nicht gegenüber der Öffnung der zweiten Platte platziert ist, welche auf Höhe des Bodens der Aufnahmekammer positioniert ist.

10. Installation zur Wiedergewinnung oder/und zur Speicherung von Regenwasser, umfassend eine Einrichtung zum Führen einer Flüssigkeitsströmung nach einem der Ansprüche 1 bis 9.

## Claims

1. Device for managing the flow of liquid, comprising a body (10) comprising an inlet orifice (11), an outlet orifice (12) and a receiving chamber (13), at least said receiving chamber (13) comprising an inclined bottom, in which device
- said receiving chamber (13) comprises a flow rate regulator (15) by means of which it is possible to vary the flow rate at said outlet orifice (12), and said flow rate regulator (15) comprises two plates (16, 18) arranged in said chamber in order to intercept said flow, being placed opposite one another, said first plate (16) comprising at least two orifices of different diameters and being mobile in rotation with respect to said second plate (18), the second plate comprising an orifice, said first plate (16) being mobile in rotation with respect to said second plate such that positioning an orifice of the first plate having diameter Φi and said orifice of the second plate opposite one another determines a liquid flow rate Di, the device being **characterized in that** said orifice of said second plate is placed at the level of the inclined bottom of said chamber (13), that is to say at the level of the water channel of the device.

2. Device according to Claim 1, **characterized in that** said orifices of the first and second plates (16, 18) are configured to provide a flow rate variation of between 1 and 50 times the smallest flow rate.

3. Device according to Claim 1 or 2, **characterized in that** it comprises a check valve (24) assigned to said flow rate regulator.

4. Device according to Claim 3, **characterized in that** it comprises a device for locking and unlocking the check valve (24), by means of which it is possible to block the flow of liquid below a predefined threshold liquid pressure, and to free up this flow when this threshold liquid pressure is reached upstream of the flow rate regulator.

5. Device according to Claim 3 or 4, **characterized in that**, said check valve (24) being mobile between a first, closure position in which it closes said flow rate regulator (15) in a liquid-tight manner and at least one second position in which it allows the passage of liquid flowing at least from the inlet orifice (11) to the outlet orifice (12), said device comprises a means to allow said check valve to move between at least said two positions.

6. Device according to Claim 5, **characterized in that** said means for allowing the movement comprises a mobile member which can be controlled remotely and of which one end is connected to said valve.

7. Device according to any one of Claims 1 to 6, **characterized in that** said body (10) is in one piece.

8. Device according to any one of Claims 1 to 7, **characterized in that** the upper portion of the flow rate regulator (15) comprises an overflow safety opening.

9. Device according to any one of Claims 1 to 8, **characterized in that** each orifice of the first plate comprises a seal to seal it with respect to the second plate when it is not placed opposite the orifice of the second plate placed at the level of the bottom of the receiving chamber.

10. Rainwater harvesting and/or storage installation comprising a device for managing the flow of liquid according to any one of Claims 1 to 9.
